# EUROPÄISCHE PATENTANMELDUNG

(11) **EP 4 617 747 A1**
(43) Veröffentlichungstag der Anmeldung: **17.09.2025**
(21) Anmeldenummer: 24163493.0
(22) Anmeldetag: 14.03.2024
(51) Int. Cl.: G02B 6/44

(54) **ANSCHLUSSBOX FÜR GLASFASERN MIT DICHTUNG**

(71) Anmelder: Hauff-Technik GRIDCOM GmbH, 73494 Rosenberg (DE)
(72) Erfinder: BÄUERLE, Manfred, 73492 Rainau-Saverwang (DE); HIMMELSBACH, Daniel, 70192 Stuttgart (DE); KRAUSE, David, 86150 Augsburg (DE); LAUMER, Peter, 82131 Gauting (DE); MAYR, Martin, 82395 Untersöchering (DE)
(74) Vertreter: Szynka Smorodin Patentanwälte Partnerschaft mbB

(57) **Zusammenfassung**

Die Erfindung betrifft eine Glasfaser-Anschlussbox mit einem Gehäuse mit Gehäusewänden und einer Dichtung in einer der Gehäusewände zum Durchführen von Glasfaserleitungen durch die Gehäusewand, welche Dichtung ein einstückiger Elastomerkörper ist und eine Vielzahl Dichtungselemente für jeweils mindestens eine Leitung sowie einen Steg aufweist, welcher Steg die Dichtungselemente miteinander verbindet, wobei die Gehäusewand Aufnahmen aufweist, welche zum Einbringen der Dichtungselemente in die Gehäusewand an die Dichtungselemente angepasst sind und in welche die in die Dichtungselemente eingelegten Leitungen jeweils in einer Richtung quer zu einer lokalen Leitungsrichtung jeweils hindurchzuführender Leitungen eingebracht sind oder werden können.

## Beschreibung

Die Erfindung betrifft eine Glasfaser-Anschlussbox.

Glasfasern (oder "Lichtwellenleiter") sind fortschrittliche Signalträger und in zunehmendem praktischem Einsatz. Insbesondere werden mehr und mehr Gebäude mit Glasfaseranschlüssen zur Datenübertragung versehen. Dabei kommen Kabelstränge mit einer größeren Zahl einzelner, jeweils ummantelter Glasfaserleitungen an, wobei die ummantelten Einzelleitungen im Folgenden als Kabel bezeichnet werden. Der Kabelstrang (in diesem Sinn mit einer Anzahl Kabel darin) ist einerseits ebenfalls ummantelt und natürlich können z. B. bei der Erdverlegung auch viele solche Kabelstränge zu noch stärkeren Leitungen zusammengefasst sein, die ihrerseits im Alltag auch oft als Kabel bezeichnet werden, im Folgenden aber nicht gemeint sind.

Wenn "Abnehmer", also Geräte und Anschlüsse für Geräte in Büros, Wohnungen, Produktionsflächen und dergleichen, mit einem Glasfasernetz verbunden werden, wird typischerweise ein Gebäudeanschluss erstellt, möglicherweise auch ein Anschluss für einen Gebäudeteil, je nach Anschlusszahl und Dimensionen. Hier sind Glasfaser-Anschlussboxen gebräuchlich, in denen einzelne Kabel aus einem Kabelstrang individuell angeschlossen werden, sei es für neue Anschlüsse oder auch zur Änderung bestehender Anschlüsse.

Grundsätzlich sind dabei Steckverbindungen und im Vergleich eher auf Dauer angelegte Spleißstellen im Einsatz. Für Steckverbindungen sind Aufnahmen gebräuchlich, die im Folgenden als Kupplungen bezeichnet werden. In eine solche Kupplung können miteinander zu verbindende Steckelemente eingeführt werden, werden darin gehalten und stellen damit den Anschluss der jeweiligen Kabel aneinander sicher. Man spricht auch von Patchstellen. Spleißstellen sind vergleichsweise empfindlich und werden in der Regel durch eine Spleißschutzvorrichtung umfasst und damit gehalten und geschützt, mit welcher Spleißschutzvorrichtung sie in eigens hierfür vorgesehenen Ablagen, also Plätzen zur Fixierung, abgelegt werden können. Oft werden aus dem Kabelstrang eingehende Kabel über eine solche Spleißstelle an sogenannte Pigtail-Kabel angeschlossen, die nur innerhalb der Anschlussbox verlaufen und an ihrem der Spleißstelle entgegengesetzten Ende ein Einsteckelement für eine Patchstelle aufweisen.

Gerade bei Gebäudeanschlüssen werden für eine gewisse Zahl solcher einzelner Verbindungsstellen Anschlussboxen mit einem Gehäuse benutzt, welches typischerweise einen Deckel und ein Unterteil aufweist und typischerweise für eine Wandmontage an einer vertikalen Wand vorgesehen ist. Solche Anschlussboxen bestehen typischerweise aus Kunststoff, insbesondere aus Spritzgussteilen. Davon zu unterscheiden sind Verteilerschränke, insbesondere aus Metall, oft mit Glastüren, in denen viel größere Zahlen von Anschlüssen in Stapeln von übereinander oder nebeneinander liegenden Modulen untergebracht sind. Mit einer Anschlussbox ist im Folgenden weder ein solcher Verteilerschrank noch das Gehäuse eines Modulstapels oder eines Moduls darin gemeint, sondern eine eigenständige Anschlussbox mit einer maximalen Anschlusszahl von z. B. bis... Anschlüssen.

Das Gehäuse einer solchen Anschlussbox dient primär dem Schutz vor mechanischen Beeinträchtigungen, etwa unbefugtem Zugriff oder unbeabsichtigten Beschädigungen, dem Schutz vor Schmutz, insbesondere Staub, und in vielen Fällen auch einem gewissen Feuchtigkeitsschutz, z. B. gegen Spritzwasser, jedenfalls im montierten Zustand.

Aus diesem Grund verfügen viele Anschlussboxen über Dichtungen zum Durchführen von Glasfaserleitungen durch Gehäusewände der Anschlussbox, die je nach Ausführung einen gewissen Schutz hinsichtlich Schmutz, Staub und/oder Feuchtigkeit sicherstellen. Solche Dichtungen werden typischerweise aus Elastomermaterial hergestellt.

Auf dieser Grundlage liegt der Erfindung die Aufgabe zugrunde, eine vorteilhafte Anschlussbox mit Dichtung vorzuschlagen.

Diese Aufgabe wird erfindungsgemäß gelöst durch eine Glasfaser-Anschlussbox mit einem Gehäuse mit Gehäusewänden und einer Dichtung in einer der Gehäusewände zum Durchführen von Glasfaserleitungen durch die Gehäusewand, welche Dichtung ein einstückiger Elastomerkörper ist und eine Vielzahl Dichtungselemente für jeweils mindestens eine Leitung sowie einen Steg aufweist, welcher Steg die Dichtungselemente miteinander verbindet, wobei die Gehäusewand Aufnahmen aufweist, welche zum Einbringen der Dichtungselemente in die Gehäusewand an die Dichtungselemente angepasst sind und in welche die in die Dichtungselemente eingelegten Leitungen jeweils in einer Richtung quer zu einer lokalen Leitungsrichtung (jeweils hindurchzuführender Leitungen) eingebracht sind oder werden können.

Die erfindungsgemäße Anschlussbox weist also mindestens eine Dichtung auf, die aus Elastomermaterial besteht. Konkret handelt es sich um einen einstückigen Elastomerkörper. Dieser Elastomerkörper enthält in seiner einstückigen Ausgestaltung eine Vielzahl von Dichtungselementen, die jeweils für mindestens eine Glasfaserleitung vorgesehen sind; die Dichtung insgesamt ist also ebenfalls für eine Vielzahl Glasfaserleitungen ausgelegt.

Die Dichtungselemente sind miteinander über einen Steg des Elastomerkörpers verbunden. Z. B. kann der Steg ungefähr geradlinig geformt sein und können die Dichtungselemente von diesem geraden Steg zu mindestens einer Seite, vorzugsweise zu genau einer Seite, abstehen. Die Dichtungselemente sind dabei vorzugsweise nur über den (vorzugsweise einzigen) Steg miteinander verbundenen.

Die Gehäusewand der Anschlussbox weist jeweils an die Dichtungselemente in ihrer Form angepasste Aufnahmen auf. Diese Aufnahmen sind dazu ausgelegt, dass die jeweiligen Dichtungselemente eingesetzt werden oder bereits eingesetzt sind. In dem in die Aufnahme eingebrachten Zustand können die Dichtungselemente ihre Aufgabe der Abdichtung des Gehäuses ausüben. Die vorliegende Schilderung und auch die Ansprüche beziehen sich jedoch auch auf einen Zustand der Anschlussbox, in der die Dichtung mit der Vielzahl Dichtungselemente lediglich beigelegt oder sonstwie im Set mit der Anschlussbox vorhanden ist und vom Nutzer eingesetzt werden kann.

Das Einbringen der Leitungen in die jeweiligen Aufnahmen erfolgt erfindungsgemäß quer zur jeweiligen lokalen Leitungsrichtung, also zu der Richtung, die die von dem jeweiligen Dichtungselement aufzunehmende und abzudichtende Glasfaserleitung in der Dichtung hat oder hätte (wenn die Glasfaserleitung noch nicht vorgesehen ist). Die Aufnahmen sind dementsprechend für diese Einbringung in Querrichtung ausgelegt. Insbesondere weisen sie zu mindestens einer Richtung eine seitliche Öffnung auf, durch welche die jeweilige Leitung in die Aufnahme eingebracht werden kann.

Das hat den Vorteil, dass die Leitungen dementsprechend in der Querrichtung in die Aufnahmen eingebracht werden können und nicht in der Leitungsrichtung hindurch gefädelt werden müssen.

Vorzugsweise sind die Dichtungselemente und die Aufnahmen so ausgelegt, dass die Dichtungselemente selbst in der Querrichtung in die Aufnahmen eingebracht werden können. Dies erfolgt typischerweise, allerdings nicht zwingend, nachdem die entsprechende Leitung in das entsprechende Dichtungselement eingebracht wurde. Im Prinzip wäre auch denkbar, dass die Aufnahmen lediglich zum Einbringen der jeweiligen Leitung quer zur Leitungsrichtung ausgelegt ist und die entsprechende Öffnung für das Dichtungselement selbst nicht genügt. Dann könnte z. B. die Leitung zunächst an ungefähr der richtigen Stelle der Leitungslänge in das Dichtungselement eingebracht werden und (im Sinn der Leitungsrichtung) versetzt zu dem Dichtungselement in die Aufnahme eingebracht werden, woraufhin dann durch eine geringfügige Bewegung in Leitungsrichtung das Dichtungselement in die Aufnahme gebracht wird. Diese letztgenannte Bewegung kann dabei geringfügig sein, weil es nur um den kleinen Versatz in Leitungsrichtung geht, der für das Einbringen der Leitung (ohne Dichtungselement an dieser Stelle) in die Aufnahme benötigt wird.

Bevorzugt ist allerdings das Einbringen des Dichtungselements in die Aufnahme mit dem Einbringen der Leitung kombiniert und jedenfalls (selbst wenn die Leitung nachträglich eingelegt wird) ein Einbringen des Dichtungselements quer zur Leitungsrichtung in die Aufnahme vorgesehen.

Grundsätzlich ist natürlich auch bevorzugt vorgesehen, dass das Dichtungselement zum Einbringen der Leitung quer zur lokalen Leitungsrichtung in das Dichtungselement ausgelegt ist, insbesondere durch eine Schlitzung des Dichtungselements. Diese Schlitzung kann schon bei der Produktion des Dichtungselements vorgesehen werden, wird aber vorzugsweise erst bei der Anwendung angebracht, z. B. durch Aufschneiden oder auch Aufreißen entlang einer Solltrennlinie.

Der hier verwendete Begriff "Vielzahl" bedeutet mindestens drei, vorzugsweise mindestens vier und mindestens fünf. Der Begriff der "Aufnahme" wird hier als die für ein jeweiliges Dichtungselement vorgesehene Aufnahmestruktur in der Gehäusewand verwendet. Es kann sich um einen Bereich einer insgesamt komplexeren Gesamtaufnahme für die gesamte Dichtung mit der Vielzahl Dichtungselemente und mit dem Steg oder einem Teil des Steges handeln. Das wird anhand des Ausführungsbeispiels noch deutlicher.

Der die Dichtungselemente verbindende Steg der Dichtung kann im "fertigen" Zustand, also bei in die Aufnahmen eingebrachten Dichtungselementen und geschlossenem Gehäuse der Anschlussbox, ebenfalls zur Abdichtung dienen. Dies beinhaltet den denkbaren Fall, dass ein Teil des Steges hierzu dient und ein anderer Teil nicht. Z. B. kann dieser andere Teil vor oder bei dem Einbringen entfernt werden. Insbesondere bleibt der Steg vorzugsweise zumindest teilweise im "fertigen" Zustand an den Dichtungselementen (wird also nicht von diesen abgetrennt). Vorzugsweise bleibt er insgesamt im fertigen Zustand an den Dichtungselementen, wobei er dabei aber zerteilt werden oder sein kann, wie im Folgenden noch deutlicher wird. Z. B. kann der Steg ganz oder stückweise einen die einzelnen Aufnahmen miteinander verbindenden Bereich füllen und damit Zwischenbereiche zwischen den Aufnahmen abdichten, vergleiche das Ausführungsbeispiel.

Es wurde bereits erwähnt, dass der Steg möglicherweise zerteilt werden kann. Bevorzugt weist er Markierungen für solche Trennpositionen auf, an denen er z. B. zerschnitten werden kann. Die Markierungen können z. B. Dünnstellen sein. Im Prinzip könnte der Steg an solchen Dünnstellen auch zerrissen statt zerschnitten werden. Der Nutzer kann es vorteilhaft finden, mit Teilen der gesamten Dichtung und nicht mit dem ursprünglich einstückigen Elastomerkörper insgesamt umzugehen, wobei vorzugsweise dem Nutzer die Wahl verbleibt, also auch die Dichtung insgesamt als einstückiger Elastomerkörper verwendbar und einbringbar ist. Jedenfalls ist die Dichtung mit der Vielzahl Dichtungselemente zunächst einstückig und damit effizient herzustellen und mit geringem Verlustrisiko aufzubewahren.

Im Ausführungsbeispiel haben die einzelnen Dichtungselemente in Bezug auf eine Blickrichtung parallel zur lokalen Leitungsrichtung eine ungefähr U-förmige Kontur, wobei die U-Form einen Teil des Randes bezeichnet und ein weiteres Stück Rand die beiden Schenkelenden des U verbindet, vergleiche das Ausführungsbeispiel. Dabei kann der Steg an dem geraden Stück dieser Form bzw. dessen Enden vorgesehen sein und damit mit diesem geraden Stück zusammen insgesamt eine gerade Form haben. Die U-förmigen Profile stehen also (vorzugsweise zu nur einer Seite) von einem gerade durchlaufenden Steg ab. Vorzugsweise verjüngt sich die U-Form von dem geraden zu dem runden Rand hin etwas, die U-Schenkel sind also nicht ganz parallel.

Diese einfache und praktische Geometrie ermöglicht gut abdichtende Übergänge zwischen den runden Teilen und auch den geraden Flanken der Schenkel der jeweiligen U-Formen nach dem Einbringen in die Aufnahmen, wobei diese Aufnahmen vorzugsweise eine genau komplementäre U-Form aufweisen. Der Steg verbindet dann die Bereiche der einzelnen Dichtungselemente miteinander, die an der offenen Seite der Aufnahmen angeordnet sind, durch die das Einbringen in Querrichtung erfolgt ist.

Hinsichtlich der U-Form wurde bislang die Kontur der Dichtungselemente in Blickrichtung parallel zur lokalen Leitungsrichtung betrachtet. Der Steg läuft vorzugsweise senkrecht dazu. In seiner Längsrichtung gesehen weist er (auch unabhängig von der U-förmigen Kontur) vorzugsweise eine T-Profilform auf, wobei die Basis des T-Profils zum (auch teilweisen) Eingriff in einer Nut einer Gehäusewand der Anschlussbox vorgesehen sein kann und das Querelement auf dieser Basis (also der horizontale Strich des T) außerhalb der Nut für eine Abdichtung sorgt und/oder die Tiefe des Eindringens in die Nut begrenzt.

Die erwähnte Längsrichtung kann vorzugsweise parallel zu einer Schwenkachse eines bevorzugten schwenkbaren Gehäusedeckels der Anschlussbox laufen, wenn die Dichtung eingesetzt ist, wobei sie vorzugsweise an einer zu der Schwenkachse entgegengesetzten Wand des Gehäuses angeordnet ist.

Auch unabhängig davon ist eine Ausführung der Anschlussbox mit einem um eine Achse schwenkbaren Deckel und den Aufnahmen für die Dichtungselemente in einer zu der Achse entgegengesetzten Gehäusewand bevorzugt. Grundsätzlich können aber auch verschiebbare Deckel oder abnehmbarer Deckel in Betracht kommen.

Bislang sind die Dichtungselemente des Elastomerkörpers hinsichtlich ihrer Eignung für jeweils mindestens eine Glasfaserleitung betrachtet worden. Vorzugsweise ist die Dichtung, also der Elastomerkörper insgesamt, mit mindestens zwei verschiedenen Durchführungstypen für Leitungen, insbesondere Leitungen unterschiedlichen Durchmessers, ausgestattet. Er bildet also eine Kombination verschiedener Durchführungstypen. Besonders bevorzugt gilt dies für mindestens eines der Dichtungselemente, vorzugsweise für alle. Insoweit bildet also je eines/jedes der Dichtungselemente für sich eine solche Kombination.

Mit verschiedenen "Durchführungstypen" ist hierbei gemeint, dass sich die jeweiligen für die Durchführung von Leitungen vorgesehenen Bereiche des Elastomerkörpers bzw. des/der Dichtungselemente im Auslieferungszustand voneinander unterscheiden. Davon unabhängig können manche Durchführungstypen durch Schneiden und insbesondere Abtrennen von Teilen an eine bestimmte Leitung und insbesondere an verschiedene Leitungsdimensionen angepasst werden. Wie gesagt charakterisiert das nicht verschiedene Durchführungstypen, sondern stellt eine bevorzugte Ausführung mindestens eines der Durchführungstypen, vorzugsweise von zweien, dar. Diese Ausführung von Durchführungstypen ist auch unabhängig von den zuvor behandelten Gedanken der Kombination verschiedener Durchführungstypen sinnvoll und bevorzugt.

Eine bevorzugte Möglichkeit für diese Anpassbarkeit eines Durchführungstyps weist eine im Innendurchmesser variierende und vorzugsweise gestufte Tülle auf. Durch Abtrennen eines Teils der Tülle ergeben sich unterschiedliche effektive Innendurchmesser an der Abtrennstelle, womit die Tülle und damit die Durchführung an verschiedene Leitungsdimensionen angepasst werden kann.

Bei der besonderen Ausgestaltung sind die gestuften Abschnitte dabei nicht konzentrisch sondern können z. B. (statt des Mittelpunkts) an einem Punkt des Innendurchmesser zusammenfallen. Damit kann erreicht werden, dass durchgeführte Leitungen an einer anderen Stelle der Anschlussbox, insbesondere weiter innen, auf eine diesem gemeinsamen Punkt des Innendurchmessers entsprechende Referenzposition ausgerichtet sind. Das wird anhand des Ausführungsbeispiels noch näher erläutert.

Ein anderer Durchführungstyp (der mit dem oben beschriebenen vorzugsweise kombiniert werden kann) enthält mindestens einen heraustrennbaren Ring. Nach Herausschneiden oder Herausreißen eines solchen Rings entsteht eine Öffnung mit ungefähr dem Außendurchmesser des herausgetrennten Rings, sodass zwischen z. B. einer Öffnung mit dem Innendurchmesser des Rings vor dessen Heraustrennen und diesem Außendurchmesser gewählt werden kann. Analog gilt das natürlich bei einer Mehrzahl Ringe.

Vor dem Heraustrennen muss in dem (innersten) Ring nicht zwingend ein Loch bestehen, sondern hier kann z. B. eine Membran oder ein anderweitiger Verschluss existieren. Damit ist die Durchführung im ungenutzten Zustand verschlossen. Vor Nutzung mit dem kleinsten in Betracht kommenden Maß muss dann die Membran durchstoßen oder ein Verschluss herausgetrennt werden.

Bei einer bevorzugten Ausgestaltung ist mindestens einer der beiden gerade behandelten Durchführungstypen doppelt vorgesehen; dann weist also mindestens ein Dichtungselement jeweils mindestens zwei gleiche dieses Durchführungstyps auf. Bei einer anderen bevorzugten Ausgestaltung weist mindestens ein Dichtungselement jeweils mindestens einen dieser beiden Durchführungstypen auf und vorzugsweise weist mindestens ein Dichtungselement (vorzugsweise alle) je zwei der behandelten Durchführungstypen auf.

Ein weiterer bevorzugter Durchführungstyp ist für die parallele Durchführung einer Mehrzahl Einzelkabel nebeneinander in derselben Durchführung ausgelegt, wobei in der Anwendung dann die Zahl der durchzuführenden Leitungen zwischen Null und dieser Mehrzahl gewählt werden kann, also z. B. auch nur eine einzige Leitung hindurchgeführt werden kann. Dabei werden vorzugsweise keine Teile abgetrennt, wobei dieser Durchführungstyp insoweit eine viel geringere Toleranz oder Anpassbarkeit hinsichtlich der Leitungsdimensionen aufweist als die zuvor behandelten.

Typischerweise und vorzugsweise werden die Dichtungselemente im Hinblick auf die darin enthaltene(n) Leitungsdurchführungen(en) geschlitzt. Dementsprechend kann die Leitung seitlich (also quer zur lokalen Leitungsrichtung) in das gewählte Dichtungselement eingebracht werden und muss nicht etwa in Leitungsrichtung hindurchgefädelt werden.

Vorzugweise sind die Dichtungselemente im Auslieferungszustand nicht geschlitzt, sondern werden vom Anwender vor dem Einbringen einer Leitung geschlitzt. Damit können nicht genutzte Durchführungen geschlossen bleiben. Vorzugweise sind Markierungen, etwa Rillen, zur Erleichterung des Schlitzens vorgesehen.

Die Schlitze führen zu einer gewissen Aufklappbarkeit zum Einlegen der Leitung, führen also von einem Rand, vorzugsweise von dem Steg aus, in die jeweilige Durchführung hinein.

Es wäre auch möglich, von Anfang an geschlitzte Elastomerkörper einzusetzen oder Schlitze für einen Teil der Durchführungen vorzusehen, etwa um den Arbeitsaufwand bei der Anwendung zu verringern. Dann beruht die Dichtheit auf der Anlage der Elastomerteile beidseits eines Schlitzes aneinander, und zwar auch bei möglicherweise nicht genutzten Durchführungen.

Weiter oben war bereits davon die Rede, dass speziell bei der durch Heraustrennen von Ringen anpassbaren Variante einer Leitungsdurchführung innen ein Verschluss vorgesehen sein kann. Vorzugsweise gilt dieser Grundgedanke von dieser Variante unabhängig generell, sind also die Dichtungselemente durch Verschlüsse, insbesondere Membranen, auch hinsichtlich der kleinsten vorgesehenen Leitungsdimension vor der Benutzung zunächst einmal geschlossen. Im Fall einer Membran kann sich diese ohne Abtrennen von Teilen um die hindurchgeführte Leitung herumlegen.

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigen
- Figur 1: eine perspektivische Ansicht einer erfindungsgemäßen Anschlussbox mit einem geöffneten Gehäuse und einem in ein Unterteil des Gehäuses eingelegten Bodenteil;
- Figur 2: eine Seitenansicht der Anschlussbox aus Figur 1, wobei in einem von dem Bodenteil nach links oben hochragenden Aufnahmeteil Spleißkassetten gelenkig aufgenommen sind und in Figur 2 hochgeklappt dargestellt sind (dabei sind in Figur 2 vordere Seitenwandteile des Gehäuseunterteils aus darstellerischen Gründen weggelassen);
- Figur 3: das Unterteil der Anschlussbox einzeln, insbesondere ohne eingesetztes Bodenteil;
- Figur 4a: das Bodenteil der Anschlussbox einzeln in Figur 1 entsprechender perspektivischer Darstellung und zur plastischeren Sichtbarkeit mit Grauschattierungen;
- Figur 4b: eine zu Figur 4a identische Darstellung, jedoch ohne Grauschattierungen;
- Figur 5: das Bodenteil aus den Figuren 4 mit darin montierten Einzelteilen und einer beispielhaften Kabelführung;
- Figur 6: eine ähnliche Darstellung wie Figur 5, jedoch mit anderen montierten Einzelteilen und einer anderen beispielhaften Kabelführung;
- Figur 7a: eine perspektivische Ansicht einer Dichtung für die Anschlussbox als einstückiger Elastomerkörper mit Grauschattierungen;
- Figur 7b: eine zu Figur 7a identische Darstellung, jedoch ohne Grauschattierungen;
- Figur 8: ein einzelnes Dichtungselement der Dichtung in einer Darstellung analog Figur 7b;
- Figur 9: das Dichtungselement aus Figur 8, wobei jedoch ein Stück weggeschnitten ist;
- Figur 10: eine perspektivische Darstellung zweier durch eine Vorderwand des Unterteils der Anschlussbox hindurchgeführter Leerrohre unter Weglassung der Dichtung aus den Figuren 7, jedoch mit einer sichtbaren Fixierung des obersten Lehrrohres mittels zwei Kabelbindern;
- Figur 11: eine andere perspektivische Darstellung nur des unteren Lehrrohres aus Figur 10, erneut unter Weglassung der Dichtung aus den Figuren 7 und außerdem unter Weglassung von zwei Kabelbindern zur besseren Sichtbarkeit eines Klemmelements.

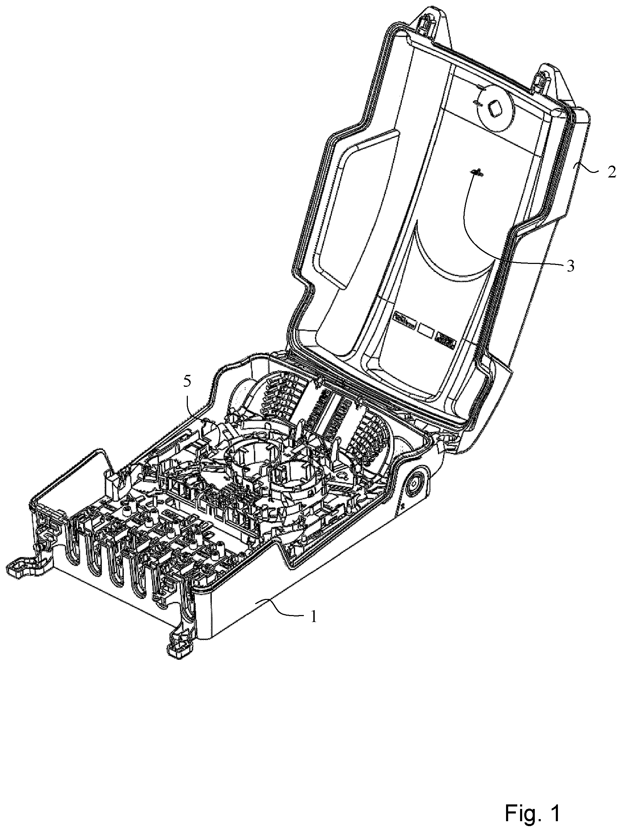

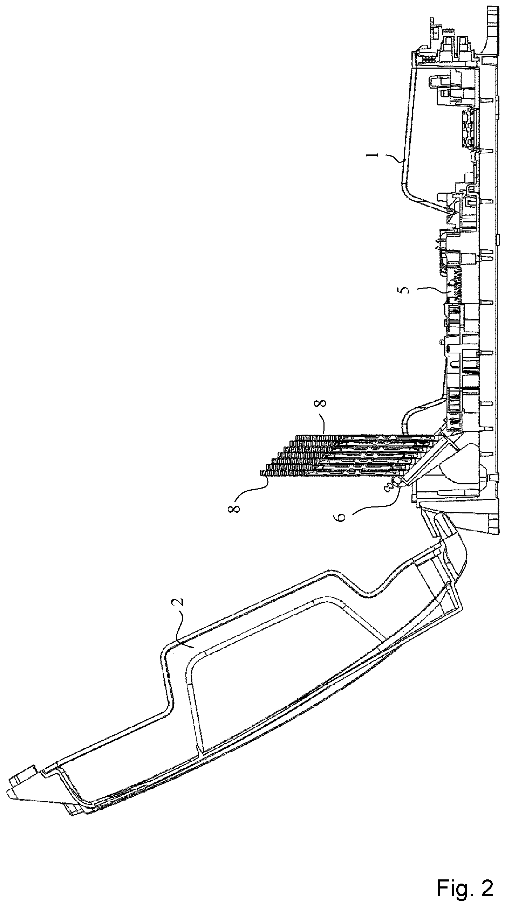

Die erfindungsgemäße Anschlussbox für Glasfaseranschlüsse in den Figuren 1 und 2 weist ein Gehäuse auf, dass aus einem Unterteil 1 und einem Deckel 2 besteht. Diese können an der in Figur 1 hinteren rechten Seite rastend in eine Gelenkverbindung miteinander gebracht werden, sodass der Deckel 2 auf- und zuklappbar ist. Die Figuren 1 und 2 und andere zeigen den aufgeklappten Zustand des Deckels 2.

Zur Erleichterung der Darstellung wird hier eine horizontale Ausrichtung des Unterteils 1 angenommen, die aber in der praktischen Anwendung nicht zwingend ist. Insbesondere kann dieses mit seiner in den Figuren 1 und 2 nach unten weisenden Seite auch an einer Wand montiert werden, sodass der Deckel 2 dann aus einer geschlossenen vertikalen Position über eine horizontale Position hinaus aufgeklappt werden kann und muss, um Zugang zum Innenraum der Anschlussbox zu erhalten.

Im geschlossenen Zustand können Deckel 2 und Unterteil 1 auch über ein Schloss miteinander verriegelt werden, bei diesem Ausführungsbeispiel ist das optional. Das Schloss kann in dem in Figur 1 oben sichtbaren kreisförmigen Feld in dem Deckel 2 in einer (durch Ausbrechen eines hierzu vorgesehenen Teils herzustellenden) Öffnung montiert werden, ist aber an sich nicht gezeigt. Es schließt mit einem Riegel gegen ein hier nicht gezeigtes optionales Kunststoff-Schließblech. Außerdem kommen die Vorsprünge 3 des Deckels 2 im geschlossenen Zustand zur Deckung mit den Vorsprüngen 4 des Unterteils 1 und es können hier Verschraubungen oder Verplombungen vorgenommen werden.

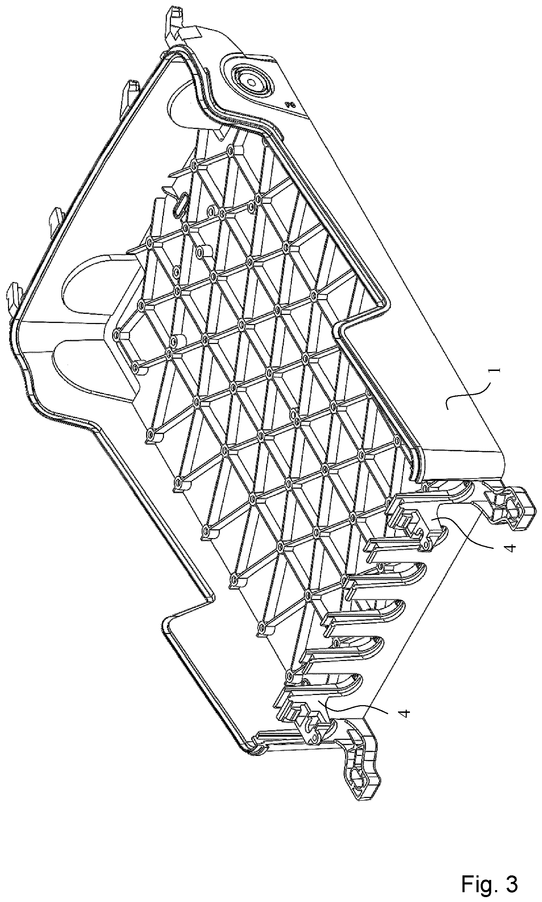

Im geschlossenen Zustand schützt die Anschlussbox vor allem von mechanischen Beschädigungen oder unbefugten Zugriffen auf den Innenraum. Im geschlossenen Zustand besteht ferner ein gewisser Feuchtigkeits- und Nässeschutz. Insbesondere ist das Unterteil 1 aus Figur 3 nach unten hin geschlossen; das dargestellte Gitter ist also eine Versteifung. Das Gitter weist an den Kreuzungspunkten (zunächst geschlossene) Stellen zum Anschrauben, z. B. auf eine Wand, auf. An den sich berührenden Kanten von Unterteil 1 und Deckel 2 können in bei diesem Beispiel deckelseitige Nuten Dichtungen eingelegt werden und jedenfalls greifen Vorsprünge am Unterteil in diese Nuten ein. Außerdem bieten die ungefähr U-förmigen Öffnungen in der nach links unten weisenden Wand des Unterteils 1 die Möglichkeit, Kabelabdichtungen anzubringen, auf die noch näher eingegangen wird. Die in Figur 3 links vorne gut sichtbaren Montagearme und ein nicht sichtbarer, aber ähnlicher mittiger Montagearm rechts hinten erlauben außerdem eine Montage des Unterteils 1 ohne innere Öffnungen in dem Unterteil 1 zur Wandseite, also mit besserem Feuchtigkeitsschutz.

Die Anschlussbox kann in ihrem Innenraum in unterschiedlicher Weise genutzt werden und für verschiedene Anschlussoptionen (Spleiß- und Patchverbindungen) sowie Kabelüberlängen unterschiedlicher Konfigurationen anbieten. Anhand der Figuren 1, 2, 4, 5, 6 wird eine sehr flexible Innenausstattung dargestellt.

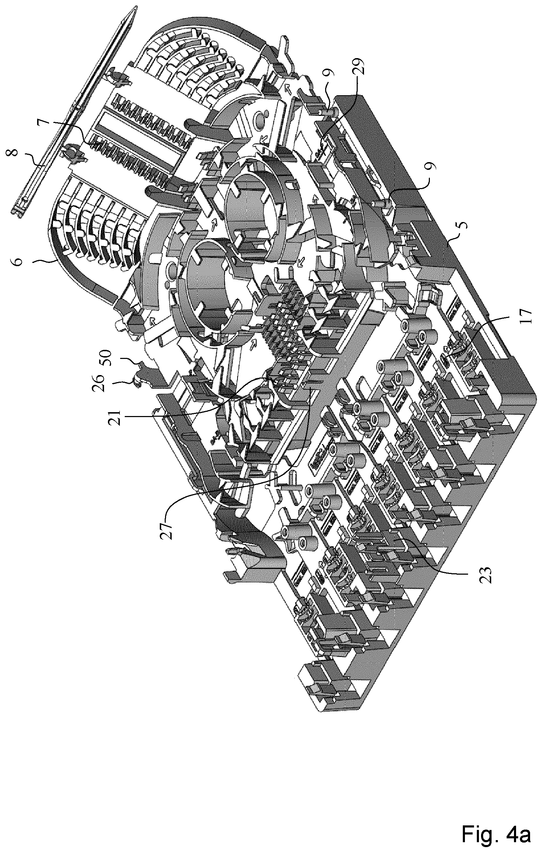

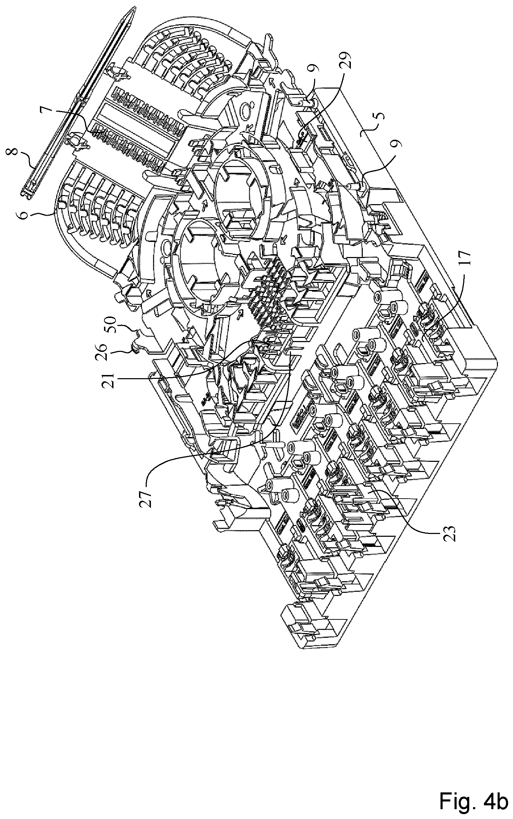

In Figur 1 sieht man bereits ein in das Unterteil 1 eingesetztes Bodenteil 5, das seinerseits in den Figur 4 einmal mit Grauschattierungen und einmal ohne dargestellt ist. Dieses Bodenteil 5 füllt das Unterteil im Wesentlichen flächig aus und weist an der der Gelenkverbindung zwischen Unterteil 1 und Deckel 2 zugewandten Seite einen schräg aufsteigenden Fortsatz auf, nämlich ein Aufnahmeteil 6 mit schräg übereinanderliegenden Gelenkaufnahmen 7 für in Figur 2 sichtbare Spleißkassetten 8, in diesem Fall maximal sieben Stück. In den Figuren 4 sieht man rechts und links davon Führungen für in die Spleißkassetten achsnah einlaufende oder daraus herauslaufende einzelne Kabel, insbesondere Pigtail-Kabel.

Die Figuren 2 und 4 verdeutlichen miteinander, dass die Spleißkassetten 8 im heruntergeklappten Zustand horizontal liegen und einen hinteren Teil der Strukturen des horizontalen Bereichs des Bodenteils 5 in den Figuren 4 verdecken, während sie im hochgeklappten Zustand gemäß Figur 2 den Zugang dazu erlauben. Außerdem wird natürlich der Zugang zu einzelnen Spleißkassetten 8 ebenfalls durch selektives Hochklappen erreicht.

Über dem Aufnahmeteil 6 sieht man in Figur 4 eine an dem Aufnahmeteil 6 angeformte und horizontal liegende Nadel 8. Diese Nadel 8 kann abgebrochen und mit ihren beiden Enden zum Manipulieren von Kabeln benutzt werden. Wenn sie nicht benötigt wird, so kann sie mithilfe des an ihrem in den Figur 4 linken Ende sichtbaren Lochs auf einem in den Figur 4 mit 9 bezeichneten vertikalen Stift am Rand fixiert werden, liegt dann parallel zu dieser Kante des Bodenteils 5 und stört bei anderen Arbeiten nicht. In der dargestellten Form handelt sich um ein mit dem übrigen Bodenteil 5 und dem Aufnahmeteil 6 spritzgusstechnisch integriertes Teil.

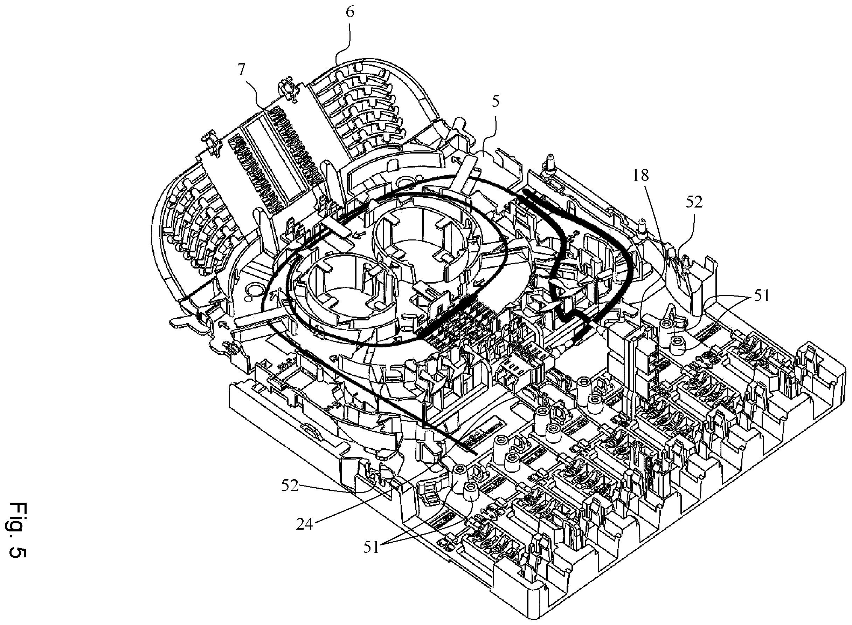

Ferner gibt es einen ersten Typ Kupplungshalter 18 gibt, der bei diesem Ausführungsbeispiel für eine lokale Leitungsrichtung der entsprechenden gekuppelten Leitungen entlang der Längsrichtung der Anschlussbox ausgelegt ist, vgl. Figur 5. Es gibt sieben entsprechende Positionen dafür, wobei in Figur 5 die dritte von rechts gewählt ist. Ein solcher Kupplungshalter 18 enthält zwei übereinanderliegende Öffnungen für jeweils eine Duplexkupplung, sodass also pro Kupplungshalte 18 maximal vier Einzelfasern gepatcht werden können. Im heruntergeklappten Zustand der Montageplatte 10 sind die Kupplungshalter 18 in allen sieben Positionen von dieser oberseitig gehalten und für Patchkabel von vorne zugänglich. Dazu muss keine Ecke der Montageplatte 10 ausgebrochen werden. Normalerweise weist die Anschlussbox sechs solche Kupplungshalter 18 auf.

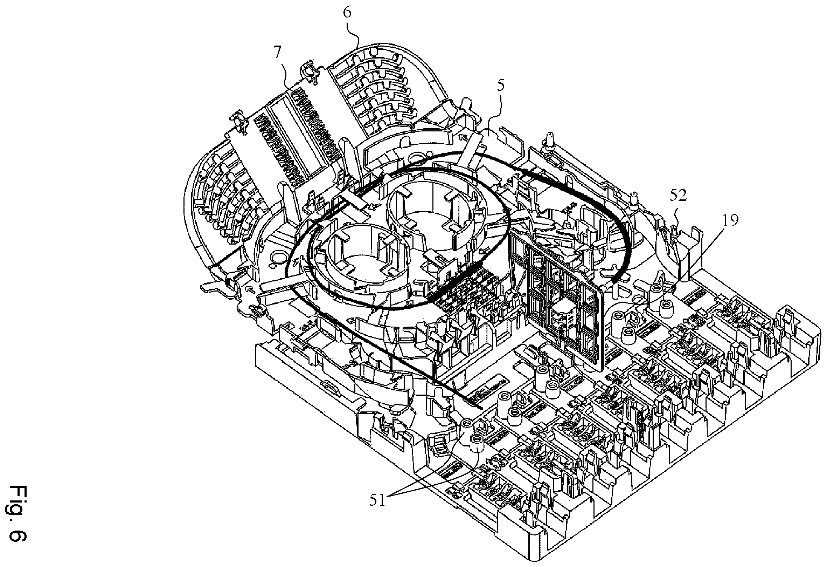

Ferner gibt es einen zweiten Typ, nämlich einen Matrix-Kupplungshalter 19, zu dem auf Figur 6 verwiesen wird. Diese Matrix 19 kann mit einer im Querschnitt quadratischen Achse 20 in einen Aufnahmebereich 21 (vgl. Figur 4) eingeclipst werden und ist in diesem Zustand (bei hochgeklappter Montageplatte 10) aus der in Figur 6 dargestellten Position um etwa 90° nach links klappbar, um im Bedarfsfall Platz zu schaffen. In der Matrix 19 finden maximal 13 Duplexkupplungen Platz.

Zusätzlich gibt es einen zusätzlichen Kupplungshalter 24, der analog zu der Matrix 19 eine 13. Duplexkupplung zulässt. Dieser "13. Kupplungshalter" 24 kann an einer in den Figur 4 mit 27 bezeichneten Stelle befestigt werden, vgl. Figur 5. Eine 13. Kupplung kann z. B. für einen separaten Gebäudeanschluss von Interesse sein und ist deswegen sowohl bei den in Längsrichtung verlaufenden als auch bei den quer dazu verlaufenden Kupplungsoptionen möglich.

Die hier erwähnten Duplexkupplungen vom Typ LC können auch durch Einfachkupplungen vom Typ SC oder E2000 ersetzt werden, was die Zahl der maximal verbindbaren Kabel halbiert.

Drehachsennäher als die besprochenen Kupplungshalter 18, 19 befindet sich ein durch die Anschlussplatte 10 effizient geschützter Bereich, der bisher im Wesentlichen in Zusammenhang mit der Aufnahme des Stapels Spleißkassetten 8 (vgl. Figur 2) besprochen wurde. Der Stapel der an dem Aufnahmeteil gelenkig gehaltenen Spleißkassetten 8 bildet dabei einen Anschlussbereich, wobei in der an sich bekannten Weise in den Spleißkassetten neben Spleißstellenablagen auch für die jeweils beteiligten Kabel eine Überlängenablage vorgesehen ist.

Auf die Möglichkeit der abgedichteten Durchführung von Kabeln durch die Vorderwand des Unterteils 1 wurde bereits hingewiesen. Typischerweise werden zum Einführen eines Bündelkabels die beiden äußersten der in diesem Zusammenhang erwähnten U-förmigen Öffnungen in der Vorderseite des Unterteils 1 verwendet, wobei dies mit oder ohne vorheriges Montieren eines Leerrohres und erst späteres Einblasen geschehen kann.

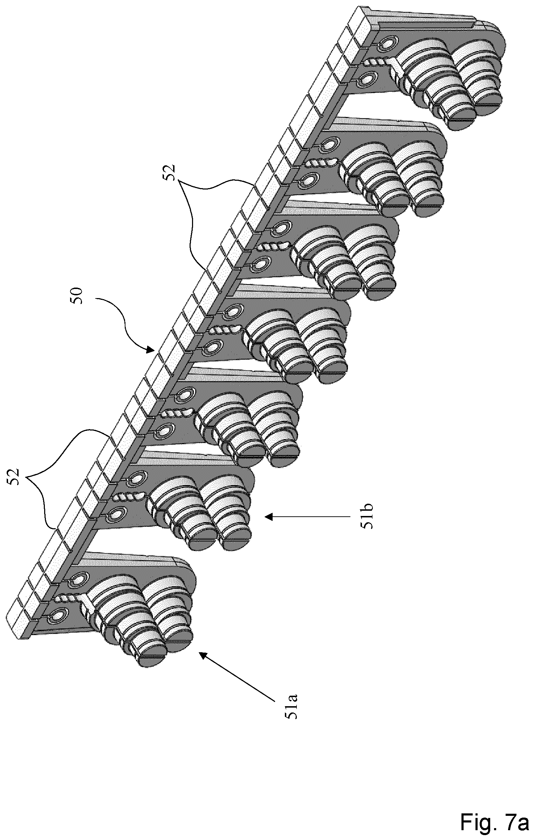

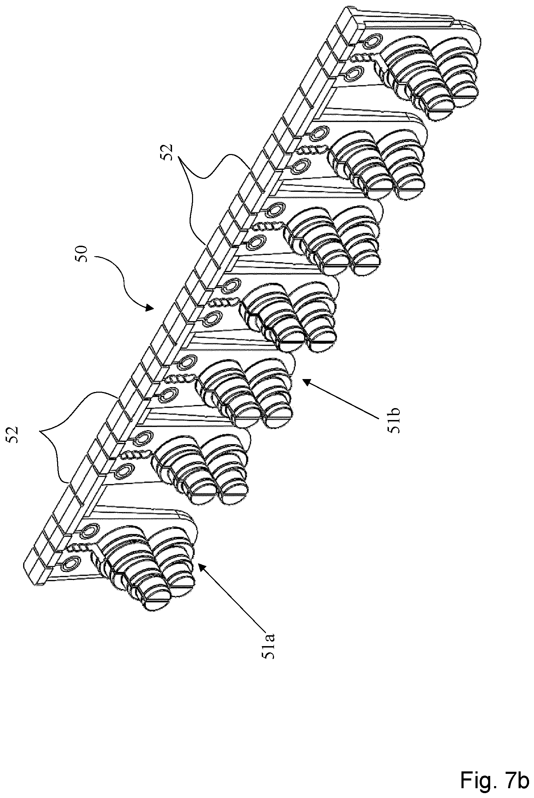

Die Figuren 7 zeigen einerseits grauschattiert und andererseits in Strichdarstellung eine perspektivische Ansicht der Dichtung für die U-förmigen Öffnungen. Es handelt sich um einen einstückigen Elastomerkörper mit sieben nebeneinander angeordneten und über einen Steg 50 oberseitig verbundenen Dichtelementen 51a/b. Diese Dichtelemente 51a/b sind zum von oben Hineinschieben in die U-förmigen Ausnehmungen des Unterteils 1 vorgesehen, wie man sich im Vergleich der Figuren 7 einerseits und z. B. 1-3 andererseits leicht vorstellen kann. In den letztgenannten sieht man links zur Veranschaulichung ein Dichtelement 51a (ohne Bezifferung). Die mittleren fünf Dichtelemente 51b sind untereinander identisch und liegen zueinander in einem etwas kleineren Querabstand. Die äußeren beiden Dichtelemente 51a sind untereinander ebenfalls identisch und ähneln im Übrigen den Dichtelementen 51b bis auf eine noch zu besprechende Abweichung weitgehend. Insgesamt ist die Dichtung rechts-links-symmetrisch.

Die Figuren 7 zeigen oberseitig an dem Steg 50 verschiedene in der Richtung einzulegender Leitungen verlaufende Markierungen, konkret Einkerbungen, wobei in den Figuren 7 diejenigen Einkerbungen 52 bezeichnet sind, die zu ihren Nachbarn in einem etwas größeren Abstand liegen und nicht über, sondern zwischen Dichtelementen 51 vorgesehen sind. Der größere Abstand außen beträgt 34 mm, der kleinere Abstand innen 28 mm. Der größere Abstand außen nimmt Rücksicht auf die größten gängigen EZA-Typen.

Die Einkerbungen markieren die Positionen zum Zertrennen des Elastomerkörpers aus den Figuren 7, also zum Abtrennen einer Gruppe von Dichtelementen 51 oder einzelner Dichtelemente. Das kann aus Handhabungsgründen vom Anwender bevorzugt sein, etwa um beim Einlegen eines Kabels oder eines Leerrohrs z. B. nur dass eine betroffene Dichtelementen 51 handhaben zu müssen, was auch das Einlegen in das Unterteil 1 betrifft. Technisch notwendig ist das Zerteilen allerdings nicht und beim Einbringen von Kabeln oder Leerrohren kann die Dichtung auch insgesamt (unzerteilt) gehandhabt werden. Das Zerteilen kann insbesondere durch Zerschneiden mit einem Messer in vertikaler Richtung erfolgen, wobei die Einkerbungen 52 über die Markierungsfunktion hinaus bereits eine deutliche Rille zum Ansetzen des Messers vorgeben.

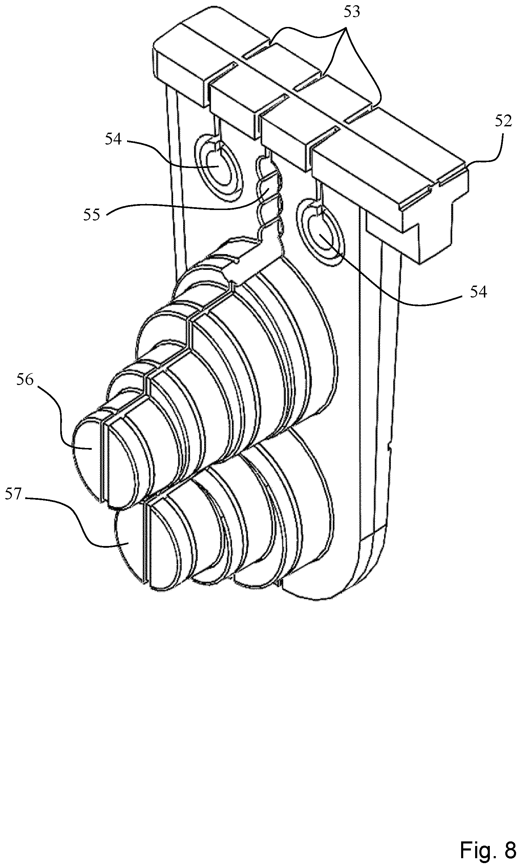

Nach dem Abteilen z. B. des linken Dichtelements 51 a aus den Figuren 7 erscheint dieses wie in Figur 8; die übrigen Dichtelemente 51 würden ähnlich erscheinen. In Figur 8 sieht man zunächst weitere Markierungen und Einkerbungen 53, die abgesehen von ihrer Position zu den bereits besprochenen Einkerbungen 52 ähnlich sind. Beide Einkerbungstypen 52 und 53 weisen in der durch eine durchgehende Linie erkennbaren Mittelebene der Dichtung (eine Naht von der formgebenden Herstellung) eine kleine Unterbrechung auf.

Die Einkerbungen 53 gehen jedoch durch die vertikale Dicke des Stegs 50 hindurch, die Einkerbungen 52 nicht. Die Einkerbungen 53 sind damit nicht nur Markierungen und Ansatzpunkte für ein Messer, sondern nach unten durchlaufende Schlitze, wie man an der Fortsetzung unterhalb des Stegs 50 in Figur 8 sieht. Diese Schlitze führen zu Durchführungen für Kabel, nämlich zwei Durchführungstypen 54 und 55.

Der Durchführungstyp 54 ist pro Dichtelement 51 doppelt vorgesehen, und zwar jeweils beidseits der Mitte (bezüglich der Querrichtung) und der Durchführungstyp 55 liegt mittig in diesem Sinn. Er enthält allerdings vier übereinanderliegende einzelne zylindrische Hohlräume, die ineinander übergehen. Hingegen gibt es pro Durchführung 54 nur einen solchen inneren zylindrischen Hohlraum, in dem sich ein (oben wieder durch den Schlitz aufgetrenntes) ringförmiges Element befindet, an den sich ein weiterer äußerer hohlzylindrischer Hohlraum anschließt. Insoweit kann man die Durchführungen 54 durch Heraustrennen des Ringelements radial vergrößern, die Durchführungen 55 nicht. Andererseits hat eine Durchführung 54 jeweils nur Platz für ein Kabel, eine Durchführung 55 allerdings für bis zu vier übereinander.

Es wurde bereits auf eine kleine Unterbrechung der Einkerbungen 52 und 53 in der Mitte des Stegs hingewiesen. Diese Unterbrechung setzt sich in die Durchführungen 54 und 55 fort und bildet dort eine Membran. Wenn also eine dieser Durchführungen benutzt werden soll, wird von oben von der Einkerbung 53 kommend mit dem Messer (nur) soweit nötig eingeschnitten. Im Fall einer Durchführung 54 muss dabei entschieden werden, ob das ringförmige Element herausgetrennt wird (herausgeschnitten oder herausgerissen), und im Fall der Durchführung 55, wie viele Kabel eingelegt werden sollen.

Konkret können die bis zu vier Kabel in der Durchführung 55 Patchkabel sein und z. B. zu dem Kupplungshalter 18 aus Figur 5 gehören. Dieser kann zwei LC-Duplex-Kupplungen aufnehmen, was vier Patchkabeln entspricht. Wie in Figur 5 erkennbar, sind die möglichen Positionen für die Kupplungshalter 18 auf die U-förmigen Plätze für die Dichtelemente 51 ausgerichtet. Natürlich können solche Patchkabel aber auch Kupplungen im Kupplungshalter 19 aus Figur 6 zugeführt werden.

Die Durchführungen 54 können als Einzelkabeldurchführungen genutzt werden und sind zunächst einmal größer. Bei diesem Beispiel können einzelne Kabel mit Durchmessern zwischen 2 und 5 mm eingelegt und abgedichtet werden.

Unter den besprochenen Durchführungstypen 54 und 55 befinden sich zwei weitere Durchführungstypen 56 und 57. Beide haben die Form einer gestuften Tülle, wobei die Figuren 7 und 8 nur außenseitige radiale Abstufungen zeigen. Diese sind aber auch innenseitig vorgesehen, also an verschiedene Leitungsdimensionen angepasst. Die untere Durchführung 57 weist in diesem Sinn drei verschiedene Durchmesser oder Radien auf, die Durchführung 56 sogar vier. Der Durchführungstyp 56 ist insoweit, wie die Figuren 7 zeigen, nur bei den beiden äußeren Dichtelementen 51a vorgesehen und dort nur jeweils einfach (oben). Der Durchführungstyp 57 existiert in diesen äußeren Dichtelementen 51a jeweils einfach (unten) und bei den inneren Dichtelementen 51b doppelt (oben und unten).

Weiterhin zeigt Figur 8, dass es auch an der Außenseite der beiden gestuften Tüllen der Durchführungen 56 und 57 mittige (bezüglich der Querrichtung) Einkerbungen zum Aufschneiden gibt. Auch hier gilt also, dass vor dem Einlegen eines Kabels ein entsprechend tief hinunter reichender Schnitt erfolgt. Die zuvor in Zusammenhang mit den Durchführungen 54 und 55 besprochene Membran besteht bei den Durchführungen 56 und 57 in diesen Einkerbungen.

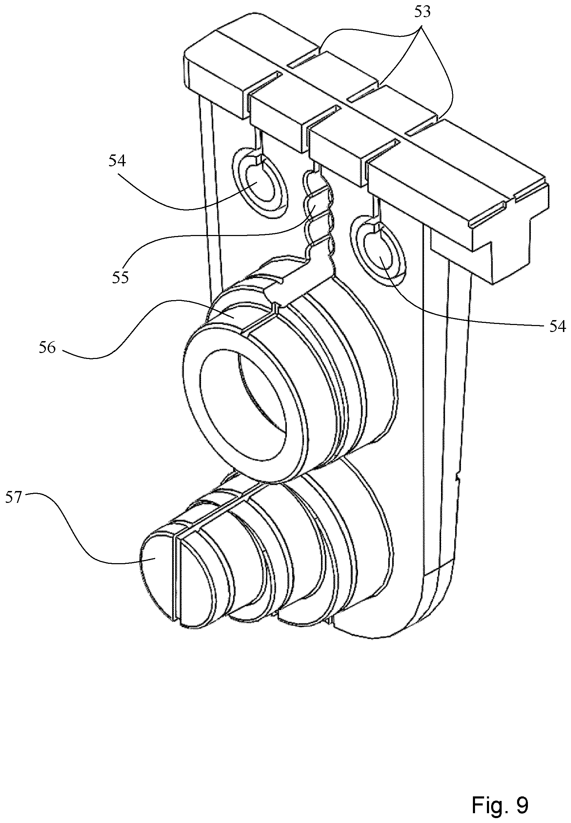

Im Übrigen zeigt Figur 9, dass der oberen Tüllendurchführung 56 aus Figur 8 die vorderen beiden kleineren Tüllenstufen und ein Teil der dritten weggeschnitten worden sind, sodass diese Durchführung 56 an den zweitgrößten der beiden verfügbaren Durchmesser angepasst worden ist. Figur 8 zeigt, dass hierfür eine in Umfangsrichtung verlaufende Einkerbung an jeder Tüllenstufe vorgesehen ist. Dementsprechend erfolgt die Anpassung aller Durchführungen 56 und 57 durch Aufschneiden der richtigen Tüllenstufe entlang dieser Einkerbung und Auftrennen der Einkerbung an der verbleibenden Tülle oben in der Mitte zum Einführen der Leitung.

Bei diesem Beispiel sind die Abstufungen des Durchführungstyps 57 auf Rohrdurchmesser oder Kabeldurchmesser von 5 mm, 7 mm und 10 mm angepasst, während der Durchführungstyp 56 zusätzlich noch die Option für den Durchmesser 12 mm vorsieht. Insgesamt bietet die Dichtung aus den Figuren 7 damit Möglichkeiten für zwei 12 mm-Kabel oder -Leerrohre, nämlich außen oben, ferner 14 Möglichkeiten für Kabel oder Leerrohre zwischen 5 und 10 mm, davon 12 zusätzlich zu den gerade genannten zweien, weitere 14 Durchführungen für Kabel zwischen 2 und 5 mm und schließlich 28 Patchkabeldurchführung.

Natürlich werden die gerade zusammengefassten Möglichkeiten in den meisten Fällen nicht voll ausgeschöpft werden. Vielmehr bieten sie in zweierlei Hinsicht eine gewisse Reserve. Erstens natürlich hinsichtlich der jeweiligen Anzahl, sodass die Anschlussbox z. B. anfangs in geringerem Maß und dann mit zunehmender Ausbaustufe umfangreicher belegt und genutzt werden kann. Zweitens aber auch hinsichtlich der unterschiedlichen Kabeltypen, die der flexiblen Nutzung der Anschlussbox entsprechen.

Der Dichtsteg 50 ist in der Richtung der noch einzulegenden Leitungen breiter als der flächige Teil der Dichtelemente 51 darunter und bildet außerdem auch für sich eine T-Form. Das Profil der Dichtelemente 51 verjüngt sich überdies nach unten. Ferner nimmt die Breite dieses flächigen Teils der Dichtelemente 51 in der Leitungsrichtung (also rechtwinklig zur Betrachtung gerade eben) gesehen ebenfalls nach unten ab.

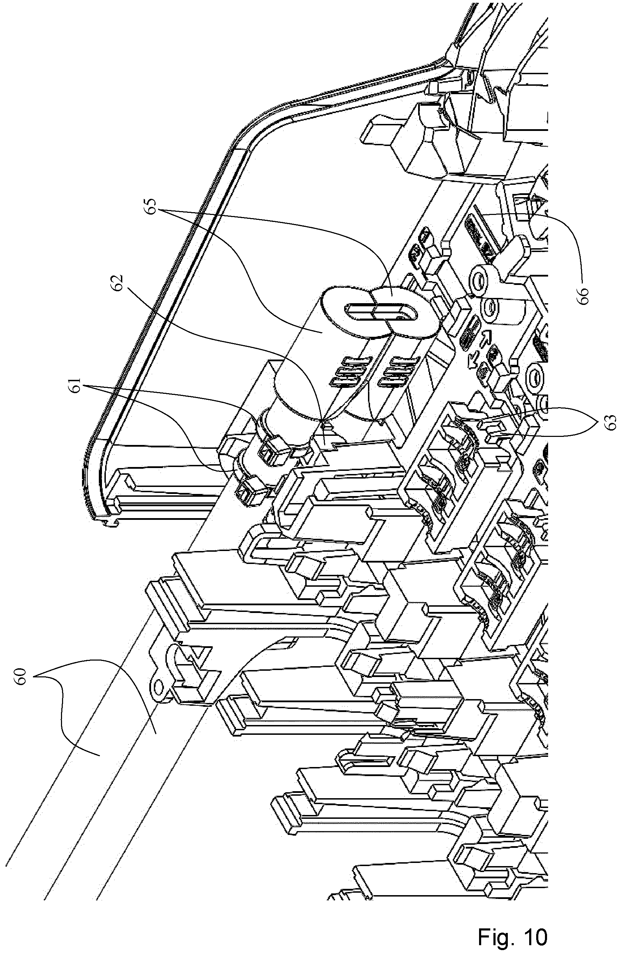

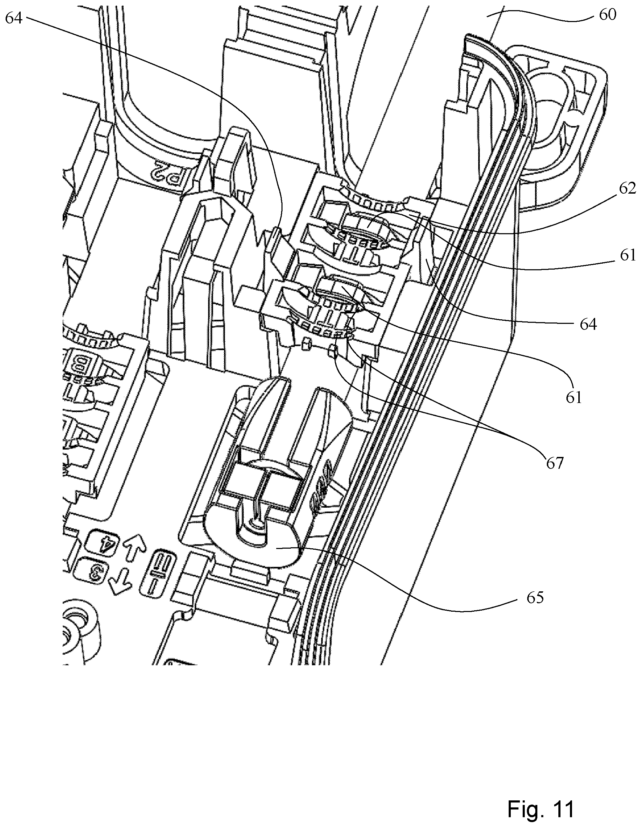

In dieser Form können die Dichtelemente 51 oder die Dichtung insgesamt in die U-förmigen Aufnahmen des Unterteils 1 eingesetzt werden, die ihrerseits, wie die im Folgenden noch zu diskutierenden Figuren 10 und 11 zeigen, beidseits (und unten umlaufend) Ausnehmungen aufweisen, die genau daran formangepasst sind.

Man erkennt in diesen Figuren 10 und 11, dass der horizontale Querteil des T-Profils oben aufliegen kann, während die übrigen Teile, d. h. der vertikale T-ProfilTeil des Stegs 50 und die flächigen Teile der Dichtelemente 51 im Übrigen, von entsprechenden Aufnahmen aufgenommen werden können. Wenn nun der Deckel 2 bei eingelegter Dichtung herunter geklappt und verschlossen wird, so entsteht eine vertikale Anpresskraft, die infolge der beiden Verjüngungen der Dichtelement 51 diese in dichtender Weise in die erwähnten Ausnehmungen hineinpresst und um die eingelegten Kabel herum angedrückt.

Die durch die relativ großen Durchführungen 56 und 57 hindurchgeführten Kabel oder Leerrohre dafür können (von außen nach innen gedacht) sozusagen direkt hinter der in die Anschlussbox eingesetzten Dichtung mechanisch stabil befestigt werden. Es geht im Folgenden also um die Zugentlastung, wozu insbesondere auf die Figuren 10 und 11 Bezug genommen wird. In Figur 10 sieht man die Dichtungsebene (ohne eingezeichnete Dichtung, aber mit den U-förmigen Aufnahmen) links hinten und zusätzlich zwei Leerrohre 60. Diese Leerrohre 60 dienen der späteren Ergänzung von Kabeln, die z. B. hindurchgeblasen werden können. Sie sind in Figur 10 in der Position eingezeichnet, die sie in den Durchführungen 56 und 57 aus den Figuren 7-9 hätten. In Figur 11 ist nur das untere der beiden Leerrohre 60 eingezeichnet und eine andere Perspektive gewählt.

Figur 10 zeigt zwei Kabelbinder 61 um das obere Leerrohr 60. Diese Kabelbinder 61 sind durch ein darunter liegendes Klemmelement 62 geschlungen, das in Figur 11 deutlich besser zu sehen ist und zwischen den beiden Leerrohren 60 liegt. Das Bodenteil 5 und damit die Anschlussbox weisen gemäß den Figuren 10 und 11 unter und über dem eingesetzten Klemmelement 62 jeweils eine Aufnahme für die Leerrohre 60 oder Kabel auf. Entsprechende Klemmelemente 62 zeigen z. B. auch die Figuren 5 und 6 vorne rechts. Sie sind im Bodenteil 5 angeordnet, und zwar im nicht benutzten Zustand entsprechend den Figuren 5 und 6 in einer Ebene (gemäß den Figuren 5 und 6 vorne rechts von nach links hinten gedacht) hinter derjenigen Ebene, in der sie im benutzten Fall, nämlich in Figur 11 rechts oben, angeordnet sind.

In der hinteren Ebene sind sie einstückig mitgespritzte integrale Bestandteile des Bodenteils 5 und können zur Benutzung aus kleinen Stegen ausgebrochen werden, mit denen sie mit dem übrigen Bodenteil 5 verbunden sind. In Figur 10 sind diese Stege mit 63 bezeichnet und unbenutzte Klemmelemente 62 im vorderen linken Bereich zu sehen.

Im ausgebrochenen Zustand können die Klemmelemente einzeln manipuliert werden, sodass z. B. die in Figur 11 dargestellten Kabelbinder 61 für das untere Leerrohr 60 leicht hindurch gefädelt werden können. Dazu weist jedes Klemmelement 62 insgesamt vier Ausnehmungen (Durchbrüche) für Kabelbinder auf, wobei in jeder Ausnehmung ein mittiger Steg zum Umschlingen durch den Kabelbinder 61 vorgesehen ist. In Figur 11 umschlingen die beiden gezeichneten Kabelbinder 61 je einen solchen Steg, während zwei weitere Stege ohne Kabelbinder, aber mit der Markierung T zu sehen sind. Diese Stege sind für die beiden Kabelbinder 61 aus Figur 10 für das obere Leerrohr 60 gedacht und liegen etwas höher als die in Figur 11 von den beiden Kabelbindern 61 verdeckten und etwas tiefer liegenden Stege, die ihrerseits mit B (B für bottom, T für top) markiert sind. Wegen dieser tieferen Lage liegt die Oberseite der beiden Kabelbinder 61 aus Figur 11 so relativ tief, dass sie die Halterung des oberen Leerrohres 60 nicht stört, also insbesondere höchstens auf dem Niveau der Stege mit der Markierung T.

Außerdem sieht man in Figur 11, dass die beiden Ausnehmungen für das untere Leerrohr 60 in der Leitungsrichtung etwas breiter sind, was den Vorteil hat, dass der links jeweils sichtbare Verschluss der beiden Kabelbinder 61 in der Ausnehmung seitlich und relativ tief untergebracht werden kann und ebenfalls das obere Leerrohr 60 nicht stört.

Ferner sieht man vor allem in Figur 11 zwei vertikal hochstehende Arme 64 mit Rastvorsprüngen. Die Klemmelemente 62 können entlang der oberseitigen Schrägen der Rastvorsprünge in eine formangepasste quaderförmigen Ausnehmung für die Klemmelemente 62 heruntergedrückt werden, woraufhin dann die Rastvorsprünge nach einer elastischen Verformung der Hebel 64 einschnappen und das jeweilige Klemmelement 62 sichern. Durch Verbiegen lässt sich die Verrastung wieder lösen, z. B. um in der Situation der Figur 11 das Klemmelement 62 mit dem unteren Leerrohr 60 zu entnehmen und das obere Leerrohr 60 darauf zu befestigen.

In Figur 11 erkennt man schließlich oberseitige Krallvorsprünge 67 in den konkav gerundeten Teilen der Oberseite des Klemmelements 62. Analoge Krallvorsprünge zeigt das Klemmelement 62 auch auf seiner Unterseite für das untere Leerrohr 60 oder Kabel.

In der durch jeweils zwei Kabelbinder redundant und besonders stabil an dem Klemmelement 62 und über dieses formschlüssig und ebenfalls besonders stabil an dem Bodenteil 5 befestigten Form sind die Leerrohre 60 praktisch und effizient zugentlastet. Analog könnte man auch mit entsprechend dicken Ummantelungen von Kabeln selbst verfahren, wenn keine Leerrohr eingesetzt werden soll. Im Übrigen ist diese Form der Zugentlastung hinsichtlich des Leerrohr- oder Kabeldurchmessers flexibel, weil sich die Kabelbinder an unterschiedliche Durchmesser anlegen und die Kabelbinder bei unterschiedlichen Durchmessern entsprechend unterschiedlich eng angezogen werden können. Damit trägt diese Art der Zugentlastung der Flexibilität der Durchführungen 56 und 57 Rechnung.

Die Figuren 10 und 11 zeigen außerdem am jeweiligen innenseitigen Ende der Leerrohre 60 Abdichtungen 65. Die Leerrohre sind so abgelängt oder eingesetzt, dass bei späterem Einbringen eines Kabels und Ersetzen dieser Abdichtungen 65 durch die bereits erwähnten Einzelzugabdichtungen (EZA) letztere nicht über Markierungen 66 im Bodenteil 5 hinausreichen, vgl. Figur 10.

Insgesamt zeigt sich, dass das Einbringen von Leerrohren 60 oder Kabeln generell ohne Hindurchfädeln in Leitungsrichtung erfolgen kann. Nicht nur lassen sich die Dichtung oder die Dichtelemente 51 aus den Figuren 7-9 quer zur Leitungsrichtung einsetzen und entnehmen (und außerhalb der Anschlussbox an der Leitung anbringen). Auch die Befestigung entsprechend den Figuren 10 und 11 kann in dieser Weise und damit praktisch und zeiteffizient erfolgen. Allenfalls beim späteren Einblasen eines Kabels in ein Leerrohr muss eine Bewegung in Leitungsrichtung erfolgen, aber dann ist das Leerrohr hinsichtlich Abdichtung und Zugentlastung fertig montiert und es geht nur noch um das Hinzufügen der EZA.

## Patentansprüche

1. Glasfaser-Anschlussbox mit
einem Gehäuse mit Gehäusewänden und
einer Dichtung in einer der Gehäusewände zum Durchführen von Glasfaserleitungen durch die Gehäusewand,
welche Dichtung ein einstückiger Elastomerkörper ist und
eine Vielzahl Dichtungselemente für jeweils mindestens eine Leitung sowie einen Steg aufweist,
welcher Steg die Dichtungselemente miteinander verbindet,
wobei die Gehäusewand Aufnahmen aufweist,
welche zum Einbringen der Dichtungselemente in die Gehäusewand an die Dichtungselemente angepasst sind und
in welche die in die Dichtungselemente eingelegten Leitungen jeweils in einer Richtung quer zu einer lokalen Leitungsrichtung jeweils hindurchzuführender Leitungen eingebracht sind oder werden können.

2. Anschlussbox nach Anspruch 1, bei welcher der Steg im eingebrachten Zustand der Dichtungselemente und im geschlossenen Zustand des Gehäuses neben den Dichtungselementen ebenfalls zur Abdichtung dient.

3. Anschlussbox nach Anspruch 1 oder 2, bei welcher der Steg Markierungen zum Zertrennen aufweist.

4. Anschlussbox nach einem der vorstehenden Ansprüche, bei welcher die Aufnahmen und die Dichtungselemente dazu ausgelegt sind, dass die Dichtungselemente in einer Richtung quer zu der lokalen Leitungsrichtung eingebracht sind oder werden können.

5. Anschlussbox nach einem der vorstehenden Ansprüche, bei welcher die Dichtungselemente in der lokalen Leitungsrichtung gesehen und abgesehen von dem Steg eine U-förmige Kontur mit einem geraden Stück zwischen den Schenkelenden der U-Form haben, wobei der Steg vorzugsweise an dem geraden Stück vorgesehen ist und sich die U-Form vorzugsweise verjüngt.

6. Anschlussbox nach einem der vorstehenden Ansprüche, bei welcher der Steg in einer Längsrichtung des Stegs gesehen eine T-Profilform aufweist.

7. Anschlussbox nach einem der vorstehenden Ansprüche mit einem um eine Achse schwenkbaren Gehäusedeckel, wobei die Aufnahmen in einer zu der Achse entgegengesetzten Gehäusewand vorgesehen sind.

8. Anschlussbox nach einem der vorstehenden Ansprüche, bei welcher der Elastomerkörper, vorzugweise mindestens eines der Dichtungselemente, eine Kombination aus mindestens zwei verschiedenen Durchführungstypen für Leitungen aufweist.

9. Anschlussbox nach einem der vorstehenden Ansprüche, bei welcher der Elastomerkörper mindestens einen Durchführungstyp, vorzugsweise zwei Durchführungstypen, aufweist, die durch Abtrennen von Teilen von dem Elastomerkörper an verschiedene Leitungsdimensionen anpassbar sind.

10. Anschlussbox nach Anspruch 9, bei welcher ein Durchführungstyp eine in ihrem Innendurchmesser variierende, vorzugsweise gestufte Tülle aufweist, die durch Abtrennen eines Teils davon an verschiedene Leitungsdimensionen anpassbar ist, wobei die gestuften Abschnitte der Tülle vorzugsweise nicht konzentrisch sind.

11. Anschlussbox nach Anspruch 9 oder 10, bei welcher ein Durchführungstyp einen austrennbaren Ring aufweist.

12. Anschlussbox nach Anspruch 10 oder 11, bei welcher der Durchführungstyp des Anspruchs 10 bzw. 11 doppelt vorgesehen ist.

13. Anschlussbox nach einem der vorstehenden Ansprüche mit einem Durchführungstyp für wahlweise ein bis zu einer Mehrzahl Einzelkabel nebeneinander in derselben Durchführung.

14. Anschlussbox nach einem der vorstehenden Ansprüche, bei welcher zumindest ein Durchführungstyp eine Markierung zum Aufschlitzen des Elastomerkörpers in der Durchführung hinein und zur Einführung einer Leitung quer zur lokalen Leitungsrichtung aufweist.

15. Anschlussbox nach einem der vorstehenden Ansprüche, bei welcher zumindest ein Teil von Ausnehmungen der Durchführungstypen im unbenutzten Zustand durch eine Membran verschlossen ist, die sich nach Einbringen einer Leitung um diese herum dichtend anlegen kann.
